# EUROPEAN PATENT APPLICATION

(11) **EP 4 333 479 A1**
(43) Date of publication of application: **06.03.2024**
(21) Application number: 22794802.3
(22) Date of filing: 24.04.2022
(51) Int. Cl.: H04W 8/24, H04W 76/25, H04W 76/27

(54) **RRC CONNECTION MAINTENANCE METHOD, RELATED DEVICE, AND READABLE STORAGE MEDIUM**

(30) Priority: 30.04.2021 CN 202110482606
(71) Applicant: Vivo Mobile Communication Co., Ltd., Dongguan, Guangdong 523863 (CN)
(72) Inventor: LIU, Jiamin, Dongguan, Guangdong 523863 (CN)
(74) Representative: Conti, Marco
(86) International application number: PCT/CN2022/088705
(87) International publication number: WO 2022/228331

(57) **Abstract**

This application discloses an RRC connection maintenance method, a related device, and a readable storage medium, and pertains to the field of communications technologies. The RRC connection maintenance method includes: establishing, by a primary terminal, a first RRC connection to a network side device, where the primary terminal is a terminal among Q terminals, the primary terminal supports transmitting information about some or all of the Q terminals, and the Q terminals support receiving data of a first service together, where Q is an integer greater than 1.

## Description

### CROSS-REFERENCE TO RELATED APPLICATIONS

This application claims priority to Chinese Patent Application No. 202110482606.3, filed on April 30, 2021 in China, which is incorporated herein by reference in its entirety.

### TECHNICAL FIELD

This application pertains to the field of communications technologies, and in particular, to an RRC connection maintenance method, a related device, and a readable storage medium.

### BACKGROUND

In the existing mechanism, each terminal separately establishes a control plane connection and a user plane connection to a core network/access network, such as a non-access stratum (Non-Access Stratum, NAS) connection of a core network control plane, a radio resource control (Radio Resource Control, RRC) connection of an access network control plane, a protocol data unit (Protocol Data Unit, PDU) session of a core network user plane, a data radio bearer (Data Radio Bearer, DRB) or a quality of service (Quality of Service, QoS) flow of an access network user plane. In other words, a control plane connection and a user plane connection of each terminal are independent of each other. Therefore, RRC connection maintenance and service transmission of each terminal are independent of each other.

Based on the existing mechanism, if two terminals are expected to continuously transmit a common service, the user needs to set a receiving and receiving progress for the service on one of the terminals, so as to achieve an effect of continuous receiving of the same service by two terminals, resulting in low autonomy of receiving the same service together by multiple terminals.

### SUMMARY

Embodiments of this application provide an RRC connection maintenance method, a related device, and a readable storage medium, which can solve the problem of low autonomy for multiple terminals in receiving a same service together in the prior art.

According to a first aspect, an RRC connection maintenance method is provided, and the method includes:
establishing, by a primary terminal, a first RRC connection to a network side device, where
the primary terminal is a terminal among Q terminals, the primary terminal supports transmitting information about some or all of the Q terminals, and the Q terminals support receiving data of a first service together, where Q is an integer greater than 1.

According to a second aspect, an RRC connection maintenance method is provided, and the method includes:
performing, by a secondary terminal, a third operation, where the third operation includes at least one of the following:
transmitting information about the secondary terminal between the secondary terminal and the network side device by proxy by using a primary terminal without establishing an RRC connection to the network side device; and
establishing a second RRC connection to the network side device, where
the secondary terminal is any secondary terminal among Q terminals, the Q terminals support receiving data of a first service together, the Q terminals include the primary terminal, and Q is an integer greater than 1.

According to a third aspect, an RRC connection maintenance method is provided, and the method includes:
maintaining, by a network side device, P RRC connections, where the P RRC connections are located between the network side device and a second target terminal, the second target terminal includes some or all of the Q terminals, and the Q terminals support receiving data of a first service together, where P is a positive integer, and Q is an integer greater than 1.

According to a fourth aspect, an RRC connection maintenance apparatus is provided, including:
a first establishing module, configured to establish a first RRC connection to a network side device, where
the primary terminal is a terminal among Q terminals, the primary terminal supports transmitting information about some or all of the Q terminals, and the Q terminals support receiving data of a first service together, where Q is an integer greater than 1.

According to a fifth aspect, an RRC connection maintenance apparatus is provided, including:
a fourth execution module, configured to perform a third operation, where the third operation includes at least one of the following:
transmitting information about the secondary terminal between the secondary terminal and the network side device by proxy by using a primary terminal without establishing an RRC connection to the network side device; and
establishing a second RRC connection to the network side device, where
the secondary terminal is any secondary terminal among Q terminals, the Q terminals support receiving data of a first service together, the Q terminals include the primary terminal, and Q is an integer greater than 1.

According to a sixth aspect, an RRC connection maintenance apparatus is provided, including:
a maintaining module, configured to maintain P RRC connections, where the P RRC connections are located between the network side device and a second target terminal, the second target terminal includes some or all of the Q terminals, and the Q terminals support receiving data of a first service together, where P is a positive integer, and Q is an integer greater than 1.

According to a seventh aspect, a communications device is provided, where the terminal includes a processor, a memory, and a program or an instruction stored in the memory and executable on the processor, and when the program or the instruction is executed by the processor, steps of the method according to the first aspect, the second aspect, or the third aspect are implemented.

According to an eighth aspect, a communications device is provided, including a processor and a communications interface, where
when the communications device is a primary terminal, the communications interface is configured to:
establish a first RRC connection to the network side device, where
the primary terminal is a terminal among Q terminals, the primary terminal supports transmitting information about some or all of the Q terminals, and the Q terminals support receiving data of a first service together, where Q is an integer greater than 1.

When the communications device is the secondary terminal, the communications interface is configured to:
perform a third operation, where the third operation includes at least one of the following:
transmitting information about the secondary terminal between the secondary terminal and the network side device by proxy by using a primary terminal without establishing an RRC connection to the network side device; and
establishing a second RRC connection to the network side device, where
the secondary terminal is any secondary terminal among Q terminals, the Q terminals support receiving data of a first service together, the Q terminals include the primary terminal, and Q is an integer greater than 1.

When the communications device is the network side device, the communications interface is configured to:
maintain P RRC connections, where the P RRC connections are located between the network side device and a second target terminal, the second target terminal includes some or all of the Q terminals, and the Q terminals support receiving data of a first service together, where P is a positive integer, and Q is an integer greater than 1.

According to a ninth aspect, a readable storage medium is provided. The readable storage medium stores a program or an instruction, and when the program or the instruction is executed by a processor, steps of the method according to the first aspect, the second aspect, or the third aspect are implemented.

According to a tenth aspect, a chip is provided. The chip includes a processor and a communications interface, the communications interface is coupled to the processor, and the processor is configured to run a program or an instruction to implement the method according to the first aspect, the second aspect, or the third aspect.

According to an eleventh aspect, a computer program/program product is provided, where the computer program/program product is stored in a non-volatile storage medium, and the program/program product is executed by at least one processor to implement the method according to the first aspect, the second aspect, or the third aspect.

According to a twelfth aspect, a communications device is provided, configured to perform steps of the method according to the first aspect, or steps of the method according to the second aspect, or steps of the method according to the third aspect.

In this embodiment of this application, the primary terminal among the Q terminals supports transmitting information about some or all of the Q terminals, and the network side device may perform unified or independent RRC connection maintenance for at least two of the Q terminals. In this way, the Q terminals may receive the same service together under the control of the network side device, thereby improving autonomy for the Q terminals in receiving a same service together, and further improving service experience and system efficiency.

### BRIEF DESCRIPTION OF DRAWINGS

FIG. 1 is a schematic diagram of a wireless communications system according to an embodiment of this application;
FIG. 2 is a first flowchart of an RRC connection maintenance method according to an embodiment of this application;
FIG. 3 is a second flowchart of an RRC connection maintenance method according to an embodiment of this application;
FIG. 4 is a third flowchart of an RRC connection maintenance method according to an embodiment of this application;
FIG. 5 is a first structural diagram of an RRC connection maintenance apparatus according to an embodiment of this application;
FIG. 6 is a second structural diagram of an RRC connection maintenance apparatus according to an embodiment of this application;
FIG. 7 is a third structural diagram of an RRC connection maintenance apparatus according to an embodiment of this application;
FIG. 8 is a structural diagram of a communications device according to an embodiment of this application;
FIG. 9 is a structural diagram of a terminal according to an embodiment of this application; and
FIG. 10 is a structural diagram of a network side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects instead of describing a specific order or sequence. It should be understood that, the terms used in such a way are interchangeable in proper circumstances, so that the embodiments of this application can be implemented in an order other than the order illustrated or described herein. Objects classified by "first" and "second" are usually of a same type, and the number of objects is not limited. For example, there may be one or more first objects. In addition, in the specification and the claims, "and/or" represents at least one of connected objects, and the character "/" generally represents an "or" relationship between associated objects.

It should be noted that, the technologies described in the embodiments of this application are not limited to a Long Term Evolution (Long Term Evolution, LTE)/LTE-Advanced (LTE-Advanced, LTE-A) system, and can also be used in other wireless communications systems such as Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), Single-carrier Frequency-Division Multiple Access (Single-carrier Frequency-Division Multiple Access, SC-FDMA), and another system. The terms "system" and "network" in the embodiments of this application may be used interchangeably. The technologies described can be applied to both the systems and the radio technologies mentioned above as well as to other systems and radio technologies. The following descriptions describe a new radio (New Radio, NR) system for example purposes, and NR terms are used in most of the following descriptions, but these technologies can also be applied to an application other than an NR system application, for example, a 6^{th} generation (6^{th} Generation, 6G) communications system.

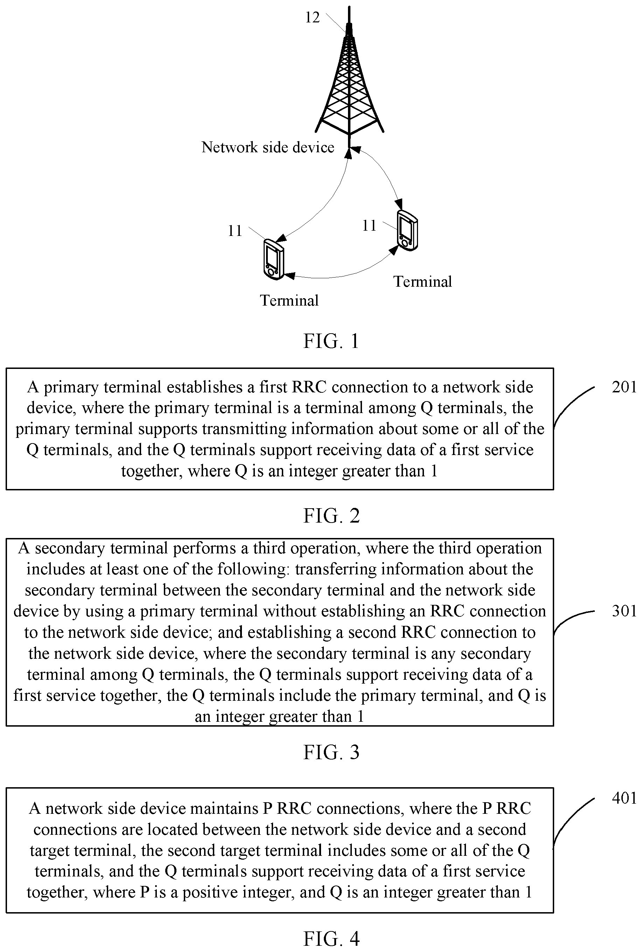

FIG. 1 is a schematic diagram of a wireless communications system according to an embodiment of this application. The wireless communications system includes a terminal 11 and a network side device 12. The terminal 11 may also be referred to as a terminal device or user equipment (User Equipment, UE). The terminal 11 may be a terminal side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), a wearable device (Wearable Device), vehicle user equipment (Vehicle User Equipment, VUE), or pedestrian user equipment (Pedestrian User Equipment, PUE). The wearable device includes a smartwatch, a bracelet, a headset, glasses, and the like. It should be noted that a specific type of the terminal 11 is not limited in the embodiments of this application. The network side device 12 may be a base station or a core network. The base station may be referred to as an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (Evolved NodeB, eNB), a home NodeB, a home evolved NodeB, a wireless local area network (Wireless Local Area Network, WLAN) access point, a Wi-Fi node, a transmitting receiving point (Transmitting Receiving Point, TRP), or another appropriate term in the art. As long as the same technical effect is achieved, the base station is not limited to a specific technical term. It should be noted that the base station in the NR system is taken only as an example in the embodiments of this application, but a specific type of the base station is not limited.

The embodiments of this application will be described in detail below through some embodiments and application scenarios thereof with reference to the accompanying drawings.

FIG. 2 is a first flowchart of an RRC connection maintenance method according to an embodiment of this application. As shown in FIG. 2, the following steps may be included.

Step 201. A primary terminal establishes a first RRC connection to a network side device.

The primary terminal is a terminal among Q terminals, and Q is an integer greater than 1. The Q terminals may include one primary terminal and Q-1 secondary terminals. The primary terminal among the Q terminals can be determined based on at least one of the following: an order of accessing the network; a capability of the terminal; and link quality of the terminal. In practical application, the primary terminal among the Q terminals can be changed. For example, when the primary terminal is determined based on the link quality of the terminal, it is assumed that the Q terminals include UE 1 and UE 2. At a first time point, link quality of the UE 1 is higher than that of the UE 2, so the UE 1 can be determined as the primary terminal in this case; and if the link quality of the UE 2 becomes better at a second time point, and the link quality of the UE 2 is higher than that of the UE 1, then the UE 2 can be determined as the primary terminal in this case.

In this embodiment of this application, the Q terminals can support receiving data of a first service together, that is, the Q terminals can support receiving data of a same service together. In this embodiment of this application, it can be regarded that Q terminals supporting receiving data of a same service together are in an association relationship.

The Q terminals support receiving the data of the first service together, which can be specifically expressed as any of the following.

Types of data of the first service received by the Q terminals are different, that is, different types of data of the first service are transmitted at different terminals, for example, different data streams are transmitted at different terminals. Data streams can be distinguished by using a QoS flow, and data with a same or similar QoS requirement can be mapped to a same QoS flow. In implementation, different data streams of the first service may be respectively transmitted to radio bearers (Radio Bearer, RB) corresponding to different terminals. For example, a user may use the UE 1 to receive data streams 1 and 2 of the first service, and use the UE 2 to receive data streams 3 and 4 of the first service.

The types of data of the first service received by the Q terminals are the same, that is, the same type of data of the first service is divided or copied, and transmitted at different terminals, for example, same data stream is transmitted at different terminals. In implementation, data of a same RB corresponding to the first service may be divided or copied, and transmitted to different terminals. For example, the user may use both the UE 1 and the UE 2 to receive the data streams 1 and 2 of the first service, and data of the first service received by the UE 1 is the same as or different from data of the first service received by the UE 2. If same data is received, the data may be repeatedly detected and deleted, and if different data is received, the received data may be sorted.

It may be understood that the first RRC connection is located between the primary terminal and the network side device. After establishing an RRC connection to the network side device, the primary terminal can directly communicate with the network side device through the communications interface between the primary terminal and the network side device.

In this embodiment of this application, the primary terminal can support transmitting information of some or all of the Q terminals, that is, the primary terminal can be used to transmit information of some or all of the Q terminals.

In implementation, the primary terminal supports transmitting information about some or all of the Q terminals, which may include at least one of the following: supporting transmitting information about the primary terminal; and supporting transmitting information about some or all secondary terminals among the Q terminals.

It should be noted that, in this embodiment of this application, the primary terminal supports transmitting information about a specific terminal, which does not mean that the information about the terminal will be transmitted by using the primary terminal. For example, if the primary terminal supports transmitting information about a secondary terminal a, the information about the secondary terminal a can be transmitted by proxy by using the primary terminal when the secondary terminal a has not established an RRC connection to the network side device (that is, configuration information or reporting information of the secondary terminal is carried in signaling of the primary terminal, and the secondary terminal has no signaling process); and when the secondary terminal a establishes an RRC connection to the network side device, the information about the secondary terminal a can be directly transmitted through a communications interface between the secondary terminal a and the network side device, and can also be transferred by using the primary terminal (also referred to as relay, intermediate transmission, or assisted transmission). In addition, the information about the primary terminal may also be transferred and transmitted by using another secondary terminal that establishes an RRC connection to the network side device, which may be specifically determined based on the actual situation, and this is not limited in this embodiment of this application.

The information about the terminal may include at least one of the following: uplink information of the terminal; and downlink information of the terminal. Optionally, the downlink information may include at least one of the following: bearer configuration information; measurement configuration information; security configuration information; DC configuration information; and carrier aggregation (Carrier Aggregation, CA) configuration information. Further, the bearer configuration information may include at least one of the following: at least one RB configuration and a configuration carrying a service data adaptation protocol (Service Data Adaptation Protocol, SDAP) layer, a packet data convergence protocol (Packet Data Convergence Protocol, PDCP) layer, a radio link control (Radio Link Control, RLC) layer, a media access control (Media Access Control, MAC) layer, and a physical (Physical, PHY) layer; and at least one RLC bearer configuration, and a configuration carrying the RLC layer, the MAC layer, and the PHY layer. The uplink information may include at least one of the following: measurement reporting information; and assistance information.

In the RRC connection maintenance method of this application, the primary terminal among the Q terminals establishes a first RRC connection to the network side device, the primary terminal supports transmitting information about some or all of the Q terminals, and the Q terminals support receiving data of a first service together, where Q is an integer greater than 1. In this way, the network side device may maintain the RRC connection between the primary terminal and the network side device, so that some or all of the Q terminals receive a same service together, thereby improving autonomy for multiple terminals in receiving a same service together, and further improving service experience and system efficiency.

In this embodiment of this application, an interaction mode between the Q terminals and the network side device is related to whether the Q terminals establish the RRC connection to the network side device, and details are as follows.

Case 1. Only the primary terminal among the Q terminals establishes an RRC connection to the network side device.

In this case, the primary terminal may support transmitting information about the Q terminals, and may be used to transmit the information about the Q terminals. In this way, even if the secondary terminal among the Q terminals does not establish the RRC connection to the network side device, the primary terminal may be used to perform communication with the network side device.

In specific implementation, the information about the primary terminal can be directly transmitted through the communications interface between the primary terminal and the network side device. As for the information about the secondary terminal, since the secondary terminal does not establish the RRC connection to the network side device, the information about the secondary terminal may be transmitted by proxy by using the primary terminal.

Optionally, after the establishing, by a primary terminal, a first RRC connection to a network side device, the method further includes:
performing, by the primary terminal, a first operation, where the first operation includes at least one of the following:
receiving first downlink information of a first secondary terminal sent by the network side device, and sending the first downlink information to the first secondary terminal, where the first secondary terminal is any secondary terminal among the Q terminals; and
receiving first uplink information sent by a second secondary terminal, and sending the first uplink information to the network side device, where the second secondary terminal is any secondary terminal among the Q terminals.

In this implementation, the primary terminal may transmit the information about the secondary terminal between the secondary terminal and the network side device by proxy.

In specific implementation, the network side device may send the downlink information of the secondary terminal to the primary terminal through the communications interface between the primary terminal and the network side device, and then the primary terminal sends the downlink information to the secondary terminal through a communications interface between terminals.

The secondary terminal may send the uplink information of the secondary terminal to the primary terminal through the communications interface between terminals, and then the primary terminal sends the uplink information to the network side device through the communications interface between the primary terminal and the network side device.

It can be seen that, in this case, the network side device can maintain the RRC connections of the Q terminals in a unified way by maintaining the first RRC connection. In this way, the Q terminals may receive the same service together under the control of the network side device, thereby improving autonomy for the Q terminals in receiving a same service together, and further improving service experience and system efficiency.

When the information about the secondary terminal is transmitted by proxy by using the primary terminal, safety protection may be performed on the information about the secondary terminal in transmission, so that transmission reliability of the information about the secondary terminal can be improved. Optionally, the information about the secondary terminal meets at least one of the following:
downlink information of the secondary terminal is sent by the network side device in a first security mechanism and is sent by the primary terminal in a second security mechanism; or downlink information of the secondary terminal is sent by the network side device in a third security mechanism; and
uplink information of the secondary terminal is sent by the secondary terminal in a second security mechanism and is sent by the primary terminal in a first security mechanism; or uplink information of the secondary terminal is sent by the secondary terminal in a third security mechanism, where
the first security mechanism is a security mechanism between the network side device and the primary terminal, the second security mechanism is a security mechanism between the primary terminal and the secondary terminal, and the third security mechanism is a security mechanism between the network side device and the secondary terminal.

In this optional implementation, in a first implementation, safety protection is performed on the information about the secondary terminal in sections between the primary terminal and the network side device, and between the primary terminal and the secondary terminal. Specifically, between the primary terminal and the network side device, the information about the secondary terminal may reuse a security mechanism between the primary terminal and the network side device; and between the primary terminal and the secondary terminal, the primary terminal is a credit terminal, the primary terminal and the secondary terminal trust each other, and safety protection is performed on the information about the secondary terminal by using a security mechanism between the primary terminal and the secondary terminal. In this implementation, the information about the secondary terminal is plaintext information for the primary terminal.

In a second implementation, an end-to-end security mechanism is established between the secondary terminal and the network side device, and the information about the secondary terminal is guaranteed in this security mechanism. In this implementation, the information about the secondary terminal is ciphertext information for the primary terminal, so that the primary terminal can be prevented from rewriting the information about the secondary terminal, and transmission reliability of the information about the secondary terminal can be further improved.

In this embodiment of this application, in order to enable the Q terminals to receive the same service together, the network side device may establish a first architecture for common transmission of the Q terminals.

The first architecture in this embodiment of this application can be understood as similar to an inverted double connection (DC) architecture because the DC architecture is used for data transmission between one terminal and two network side devices, while the first architecture is used for data transmission between Q terminals and one network side device. In addition, since the first architecture includes multiple terminals for common transmission of the multiple terminals, the first architecture can also be referred to as a multi-UE architecture or a multi-UE common transmission architecture.

In Case 1, the primary terminal may trigger the network side device to establish the first architecture in the following manners.

Optionally, after the establishing, by a primary terminal, a first RRC connection to a network side device, the method further includes:

sending, by the primary terminal, first information to the network side device, where the first information indicates that the primary terminal expects to receive the data of the first service together with other terminals.

In this implementation, the primary terminal may trigger the network side device to establish the first architecture through the first information, and the first information may be regarded as request information for the primary terminal to request establishment of the first architecture. After establishing the first architecture, the network side device may send the first service through the first architecture, so that the Q terminals receive the first service together.

In practical application, after receiving the first information, the network side device may first perform a basic authentication and verification process, and after the verification passes, the first architecture is established, so that the transmission reliability of the first architecture can be improved. In implementation, the authentication and verification process can be carried out by a core network, or the core network can deliver authentication information to a base station for storage, and the base station performs verification based on stored information.

It should be noted that the primary terminal may indicate or not indicate terminals with which the network side device expects to receive the data of the first service together when requesting the establishment of the first architecture.

In a scenario that the terminals are not indicated, the network side device may determine an obtained terminal associated with the primary terminal as a secondary terminal that receives the same service together with the primary terminal. For example, the first architecture may include Q-1 secondary terminals associated with the primary terminal in a same family package, but this application is not limited to this. In this way, signaling overhead can be reduced.

In a scenario that the terminals are indicated, the primary terminal may report the identification information of the secondary terminal to the network side device. In this way, flexibility for determining the secondary terminal can be improved.

Optionally, the first information may further include related information of at least one secondary terminal, and the related information includes at least one of the following: identification information; authentication information; capability information; and assistance information, where the Q terminals include the at least one secondary terminal.

In implementation, the identification information of the secondary UE can be expressed as a serving-temporary mobile subscription identifier (Serving-Temporary Mobile Subscription Identifier, S-TMSI), but this application is not limited to this. The authentication information of the secondary UE can also be referred to as authorization information, which is used for the core network and the radio access network (Radio Access Network, RAN) to verify a permission of the first architecture. The capability information of the secondary UE is used to provide an appropriate configuration for the secondary UE. The assistance information of the secondary UE may include at least one of the following: a power saving requirement of the secondary UE; and a transmission requirement of the secondary UE, and the like.

Case 2. The Q terminals separately establish an RRC connection to the network side device.

In Case 2, the following implementations can be included.

Implementation 1: Each terminal performs communication directly through an interface between the terminal and the network side device.

In Implementation 1, transmission channels of information about the terminals are independent, and the information about the terminals are transmitted through the interface between the terminal and the network side device. For example, if the Q terminals include UE 1 and UE 2, information about the UE 1 is transmitted through an interface between the UE 1 and the network side device, and information about the UE 2 is transmitted through an interface between the UE 2 and the network side device. In this case, the primary terminal may support transmitting only the information about the primary terminal.

Implementation 2: Information about at least one of the Q terminals is transferred by using other terminals.

In Implementation 2, although each of the Q terminals establishes the RRC connection to the network side device, some terminals may be affected by factors such as capability or link quality. In this way, these terminals temporarily lose a capability for transmitting uplink (UpLink, UL) and/or downlink (DownLink, DL) RRC signaling. In this case, these terminals need to use other terminals to transmit information thereof.

Optionally, after the establishing, by a primary terminal, a first RRC connection to a network side device, the method further includes:
performing, by the primary terminal, a second operation, where the second operation includes at least one of the following:
receiving second downlink information of a fourth secondary terminal sent by the network side device, and sending the second downlink information to the fourth secondary terminal, where the fourth secondary terminal is any secondary terminal among the Q terminals; and
receiving second uplink information sent by a fifth secondary terminal, and sending the second uplink information to the network side device, where the fifth secondary terminal is any secondary terminal among the Q terminals.

In this optional implementation, downlink information of the fourth secondary terminal is transferred by using the primary terminal, and the fourth secondary terminal may be any secondary terminal among the Q terminals that does not have a DL RRC signaling transmission capability. Uplink information of the fifth secondary terminal is transferred by using the primary terminal, and the fifth secondary terminal may be any secondary terminal among the Q terminals that does not have a UL RRC signaling transmission capability.

It can be seen that, in an optional implementation, the primary terminal may support transmitting information of a secondary terminal that does not have an RRC signaling transmission capability. Certainly, the primary terminal may also directly support transmitting the information about the Q terminals.

In practical application, the fourth secondary terminal and the fifth secondary terminal may be the same secondary terminal or different secondary terminals. When the fourth secondary terminal and the fifth secondary terminal are the same secondary terminal, the information about the secondary terminal transmitted by the primary terminal is bidirectional; and when the fourth secondary terminal and the fifth secondary terminal are different secondary terminals, the information about the secondary terminal transmitted by the primary terminal is unidirectional. Information in one transmission direction of the secondary terminal is transferred by the primary terminal, and information in another transmission direction is transmitted through an interface between the secondary terminal and the network side device.

Optionally, information about the secondary terminal (for example, the fourth secondary terminal and the fifth secondary terminal) may be forwarded through a radio link control (RLC) layer of the primary terminal, and the information about the secondary terminal may be received or sent through a packet data convergence protocol (PDCP) layer of the secondary terminal.

In this implementation, the information about the secondary terminal may be transmitted through an RLC bearer path of the primary terminal and a PDCP and an upper layer path of the secondary terminal.

It can be seen that for the RRC connection of the secondary terminal, the RRC layer and the PDCP layer can be maintained end-to-end (between the secondary terminal and the base station), while the PDCP PDU can be transferred through the RLC Bearer of the primary terminal.

In practical application, the transmission channel for transmitting RRC signaling of the secondary terminal can be configured by the network side device. The secondary terminal or the primary terminal reports a requirement/request to the network side device, and the network side device may configure an appropriate path based on the requirement/request to transmit the RRC signaling of the secondary terminal in a suitable transmission mode.

In Case 2, an order in which each of the Q terminals establishes the RRC connection is not limited. The RRC establishment of the secondary terminal may occur after the RRC establishment of the primary terminal or before the RRC establishment of the primary terminal.

Optionally, after the establishing, by a primary terminal, a first RRC connection to a network side device, the method further includes at least one of the following:
sending, by the primary terminal, first information to the network side device, where the first information indicates that the primary terminal expects to receive the data of the first service together with other terminals;
receiving, by the primary terminal, at least one dedicated random access resource sent by the network side device; and
sending, by the primary terminal, a dedicated random access resource to a third secondary terminal, where the third secondary terminal is any secondary terminal among the Q terminals.

In this optional implementation, the RRC establishment of the secondary terminal may occur after the RRC establishment of the primary terminal. A trigger condition for the network side device to establish the first architecture may be: receiving the first information sent by the primary terminal; or establishing an RRC connection to a secondary terminal using a dedicated random access resource allocated by the network side device, but this application is not limited to this.

When the trigger condition is to receive the first information sent by the primary terminal, in one implementation, the network side device may determine Q-1 terminals that first establish the RRC connection to the network side device after receiving the first information as Q-1 secondary terminals in the first architecture. In another implementation, the network side device may send Q-1 dedicated random access resources to the primary terminal, and determine the Q-1 terminals that use the Q-1 dedicated random access resources to establish the RRC connection as Q-1 secondary terminals in the first architecture.

When the trigger condition is that the RRC connection is established to the secondary terminal using the dedicated random access resource allocated by the network side device, the network side device may send the dedicated random access resources in advance. In this case, the network side device may determine Q-1 terminals that establish the RRC connection using a pre-allocated dedicated random access resource as Q-1 secondary terminals in the first architecture.

Optionally, after the establishing, by a primary terminal, a first RRC connection to a network side device, the method further includes:
sending, by the primary terminal, second information to the network side device, where the second information includes identification information of Q-1 secondary terminals among the Q terminals.

In this implementation, the Q terminals may separately establish the RRC connection. In order for the network side device to determine an association relationship of the Q terminals, in one implementation, the primary terminal may report identification information of the Q-1 secondary terminals to the network side device; and in another implementation, each secondary terminal may report the identification information of the primary terminal to the network side device.

It should be noted that the manner 1 and the manner 2 can be implemented independently or in combination. For example, a first part of secondary terminals among the Q terminals may establish the RRC connection through a contention-based random access procedure, and a second part of secondary terminals among the Q terminals may initiate, by using the dedicated random access resource allocated by the network side device, a contention-free random access procedure to establish the RRC connection. After establishing the RRC connection, the first part of secondary terminals may report the identification information of the primary terminal to the network side device through RRC signaling thereof, so that the network side device learns of the association relationship between the primary terminal and the first part of secondary terminals. Since the second part of secondary terminals uses the dedicated random access resource allocated by the network side device to initiate the contention-free random access procedure, to establish the RRC connection, the network side may learn of the association relationship between the primary terminal and the second part of secondary terminals.

FIG. 3 is a second flowchart of an RRC connection maintenance method according to an embodiment of this application. The RRC connection maintenance method of FIG. 3 is performed by the secondary terminal. As shown in FIG. 3, the following steps may be included.

Step 301. A secondary terminal performs a third operation.

The third operation includes at least one of the following:
transmitting information about the secondary terminal between the secondary terminal and the network side device by proxy by using a primary terminal without establishing an RRC connection to the network side device; and
establishing a second RRC connection to the network side device, where
the secondary terminal is any secondary terminal among Q terminals, the Q terminals support receiving data of a first service together, the Q terminals include the primary terminal, and Q is an integer greater than 1.

When the information about the secondary terminal is transmitted by proxy by using the primary terminal, the information about the secondary terminal can meet at least one of the following:
downlink information of the secondary terminal is sent by the network side device in a first security mechanism and is sent by the primary terminal in a second security mechanism; or downlink information of the secondary terminal is sent by the network side device in a third security mechanism; and
uplink information of the secondary terminal is sent by the secondary terminal in a second security mechanism and is sent by the primary terminal in a first security mechanism; or uplink information of the secondary terminal is sent by the secondary terminal in a third security mechanism, where
the first security mechanism is a security mechanism between the network side device and the primary terminal, the second security mechanism is a security mechanism between the primary terminal and the secondary terminal, and the third security mechanism is a security mechanism between the network side device and the secondary terminal.

In this embodiment of this application, the secondary terminal may establish the RRC connection through the contention-based random access procedure or the contention-free random access procedure.

Optionally, the establishing, by a secondary terminal, a second RRC connection to the network side device includes:
receiving, by the secondary terminal, a dedicated random access resource sent by the primary terminal; and
using, by the secondary terminal, the dedicated random access resource to establish the second RRC connection to the network side device.

In this implementation, the secondary terminal establishes the RRC connection through the contention-free random access procedure, and the network side device may learn of the association relationship between the primary terminal and the secondary terminal without an additional signaling instruction, thus reducing signaling overhead.

Optionally, after the establishing, by a secondary terminal, a second RRC connection to the network side device, the method further includes:
sending, by the secondary terminal, third information to the network side device, where the third information includes identification information of the primary terminal.

In this implementation, the secondary terminal establishes the RRC connection through the contention-based random access procedure. In order to enable the network side device to learn of the association relationship between the primary terminal and the secondary terminal, the secondary terminal may indicate the identification information of the primary terminal through RRC signaling after establishing the RRC connection.

Optionally, after the establishing, by a secondary terminal, a second RRC connection to the network side device, the method further includes:
performing, by the secondary terminal, a fourth operation, where the fourth operation includes at least one of the following:
transmitting the information about the secondary terminal through a first interface, where the first interface is a communications interface between the secondary terminal and the network side device; and
transferring the information about the secondary terminal between the secondary terminal and the network side device by using a first target terminal, where the first target terminal is the primary terminal or any other secondary terminal among the Q terminals.

In this implementation, the information about the secondary terminal may be transmitted through the interface between the secondary terminal and the network side device, and may also be transferred through the primary terminal or another secondary terminal, which can be determined based on the actual situation, and this is not limited in this embodiment of this application.

Optionally, in a case that the information about the secondary terminal is transferred by using the first target terminal, the information about the secondary terminal meets: a passed PDCP layer is located at the secondary terminal, and a passed RLC layer is located at the first target terminal.

In the RRC connection maintenance method of this embodiment, the secondary terminal may or may not establish the RRC connection. When the RRC connection is not established, the information about the secondary terminal is transferred by using the primary terminal, and the network side device may realize unified maintenance for RRC connections of the Q terminals by maintaining the RRC connection between the primary terminal and the network side device; and when the RRC connection is established, the network side device separately maintains the RRC connections of the Q terminals. In this way, the Q terminals may receive the same service together under the control of the network side device, thereby improving autonomy for the Q terminals in receiving a same service together, and further improving service experience and system efficiency.

It should be noted that this embodiment is an embodiment of the secondary terminal corresponding to the method embodiment in FIG. 2. Therefore, reference may be made to the related description in the method embodiment shown in FIG. 2, and a same beneficial effect can be achieved. To avoid repetition of description, details are not described herein again.

FIG. 4 is a third flowchart of an RRC connection maintenance method according to an embodiment of this application. The RRC connection maintenance method of FIG. 4 is performed by the network side device. As shown in FIG. 3, the following steps may be included.

Step 401. A network side device maintains P RRC connections, where the P RRC connections are located between the network side device and a second target terminal, the second target terminal includes some or all of the Q terminals, and the Q terminals support receiving data of a first service together, where P is a positive integer, and Q is an integer greater than 1.

In practical application, P may be less than or equal to Q, which may include the following cases.
1) In a case that P is equal to 1, the RRC connection may be located between the network side device and a primary terminal among the Q terminals.

Optionally, the maintaining, by a network side device, P RRC connections includes:
establishing, by a network side device, an RRC connection to the primary terminal;
receiving, by the network side device, first information sent by the primary terminal, where the first information indicates that the primary terminal expects to receive the data of the first service together with other terminals; and
establishing, by the network side device, a first architecture based on the first information, where the first architecture includes the Q terminals.

In implementation, the first information is used to trigger the network side device to establish the first architecture.

Optionally, the first information further includes related information of at least one secondary terminal, and the related information includes at least one of the following: identification information; authentication information; capability information; and assistance information, where
the Q terminals include the at least one secondary terminal.

Optionally, after the maintaining, by a network side device, P RRC connections, the method further includes at least one of the following:
sending, by the network side device, downlink information of the Q terminals to the primary terminal; and
receiving, by the network side device, uplink information of the Q terminals sent by the primary terminal.

It should be noted that, in actual application, the information about the Q terminals can be sent simultaneously or sequentially, which may be specifically determined based on the actual situation, and this is not limited in this embodiment of this application.

Optionally, the information about the secondary terminal among the Q terminals meets at least one of the following:
downlink information of the secondary terminal is sent by the network side device in a first security mechanism and is sent by the primary terminal in a second security mechanism; or downlink information of the secondary terminal is sent by the network side device in a third security mechanism; and
uplink information of the secondary terminal is sent by the secondary terminal in a second security mechanism and is sent by the primary terminal in a first security mechanism; or uplink information of the secondary terminal is sent by the secondary terminal in a third security mechanism, where
the first security mechanism is a security mechanism between the network side device and the primary terminal, the second security mechanism is a security mechanism between the primary terminal and the secondary terminal, and the third security mechanism is a security mechanism between the network side device and the secondary terminal.

2) In a case that P is equal to Q, the Q RRC connections are respectively located between the network side device and the Q terminals, that is, an RRC connection is established between each terminal and the network side device.

Optionally, the maintaining, by a network side device, P RRC connections includes:
establishing, by the network side device, an RRC connection to a primary terminal;
separately establishing, by the network side device, Q-1 RRC connections to Q-1 terminals, where at least one RRC connection among the Q-1 RRC connections is established by using a dedicated random access resource; and
establishing, by the network side device, a first architecture, where the first architecture includes the primary terminal and the Q-1 terminals.

In specific implementation, the Q-1 RRC connections can be established together or one by one, which may be specifically determined based on the actual situation, and this is not limited in this embodiment of this application.

Optionally, after the establishing, by the network side device, an RRC connection to a primary terminal, and before the separately establishing, by the network side device, Q-1 RRC connections to Q-1 terminals, the method further includes at least one of the following:
receiving, by the network side device, first information sent by the primary terminal, where the first information indicates that the primary terminal expects to receive the data of the first service together with other terminals; and
sending, by the network side device, at least one dedicated random access resource to the primary terminal.

Optionally, the maintaining, by a network side device, P RRC connections includes:
separately establishing, by the network side device, Q RRC connections to the Q terminals; and
establishing, by the network side device, a first architecture based on received third information, where the first architecture includes the Q terminals, where
the third information is sent by a primary terminal among the Q terminals, and the third information includes identification information of Q-1 secondary terminals among the Q terminals; or the third information is sent by a secondary terminal among the Q terminals, and the third information sent by each secondary terminal includes the identification information of the primary terminal among the Q terminals.

Optionally, after the maintaining, by a network side device, P RRC connections, the method further includes:
performing, by the network side device, a fifth operation, where the fifth operation includes at least one of the following:
transmitting information about a seventh secondary terminal through a first interface, where the first interface is a communications interface between the network side terminal and the seventh secondary terminal, and the seventh secondary terminal includes at least one secondary terminal among the Q terminals; and
transmitting information about an eighth secondary terminal through a second interface, where the second interface is a communications interface between the network side terminal and a third target terminal, the third target terminal is a primary terminal among the Q terminals or any secondary terminal among the Q terminals other than the eighth secondary terminal, and the eighth secondary terminal includes at least one secondary terminal among the Q terminals.

Optionally, information about the eighth terminal meets: a passed PDCP layer is located at the eighth secondary terminal, and a passed RLC layer is located at the second target terminal.

3) When P is greater than 1 and less than Q, P of the Q terminals establish the RRC connection. Information about each of the P terminals may be transmitted through an interface between the terminal and the network side device, and may also be transferred through other terminals in the P terminals; and information about other Q-P terminals may be transmitted by proxy by using any terminal among the P terminals.

It should be noted that this embodiment is an embodiment of the network side device corresponding to the foregoing method embodiment in FIG. 2. Therefore, reference may be made to the related description in the method embodiment shown in FIG. 2, and a same beneficial effect is achieved. To avoid repetition of description, details are not described herein again.

In this embodiment of this application, an X^{th} secondary terminal (such as a first secondary terminal to an eighth secondary terminal) may be any of the Q terminals. In practical application, different X^{th} secondary terminals can be a same secondary terminal or different secondary terminals, which may be specifically determined based on the actual situation, and this is not limited in this embodiment of this application.

The plurality of optional implementations described in this embodiment of this application may be implemented in combination with each other without conflict, or may be implemented separately. This is not limited in this embodiment of this application.

For ease of understanding, example descriptions are as follows.

This application mainly solves the problem of RRC connection maintenance when two or more devices transmit a service together, which may include the following content.

In order to realize uniformity of configuration of multiple devices, the network side may maintain RRC connections for multiple UEs in any of the following manners:
1) maintaining one RRC connection, which is located between the primary UE and an NR NodeB (NR NodeB, gNB), and information about another UE, such as RRC configuration signaling and reporting signaling, may be maintained by proxy by using the primary UE;
2) maintaining multiple RRC connections, which are respectively located between each UE and gNB, and information about each UE is maintained by each UE; and
3) maintaining multiple RRC connections, which are respectively located between each UE and gNB, and the information about the UE may be transmitted with the assistance of another UE, for example, the information about the secondary UE may be transmitted with the assistance of the primary UE.

The above three manners will be described in the following embodiments.

### Embodiment 1: one RRC connection, corresponding to 1).

First of all, UE that accesses the network first can be determined as the primary UE, and then the primary UE can be reconfigured. The primary UE is usually UE with high capability and good link quality.

When accessing the network, the primary UE may establish a legacy RRC connection to gNB, and then the primary UE reports a requirement for establishing a multi-UE architecture. Optionally, information about another UE is also reported to the network, and the information about the another UE may include the following information or combinations:
identification information of the secondary UE, such as S-TMSI;
authorization/authentication information of the secondary UE, which is used for the core network and the RAN to verify a multi-UE architecture permission;
capability information of the secondary UE, which is used to provide an appropriate configuration for the secondary UE; and
other assistance information of the secondary UE, for example, a power saving requirement, and a transmission requirement.

When receiving request information of the multi-UE architecture, the base station may first perform a basic authentication and verification process, which may be performed by being sent to the core network, or the core network may deliver the information to the base station for storage in advance, and the base station performs verification based on stored information. After the verification is passed, the base station decides to establish a multi-UE common transmission architecture for two or more UEs.

The base station may send the configuration information of each UE to the primary UE, and the configuration information includes the following content.

Configuration information of the primary UE may include: bearer configuration information of the primary UE, including N0 RB configurations and a configuration carrying SDAP, PDCP, RLC, MAC, and a PHY layer, or include M0 RLC bearer configurations and a configuration carrying RLC, MAC, and a PHY layer; measurement configuration information; security configuration information; and DC or CA configuration information;
configuration information of the secondary UE 1 may include: bearer configuration information used by the secondary UE 1, including N1 RB configurations and a configuration carrying SDAP, PDCP, RLC, MAC, and a PHY layer, or include M1 RLC bearer configurations and a configuration carrying RLC, MAC, and a PHY layer; measurement configuration information; security configuration information; and DC or CA configuration information; and
configuration information of the secondary UE 2 may include: bearer configuration information used by the secondary UE 2, including N2 RB configurations and a configuration carrying SDAP, PDCP, RLC, MAC, and a PHY layer, or include M2 RLC bearer configurations and a configuration carrying RLC, MAC, and a PHY layer; measurement configuration information; security configuration information; and DC or CA configuration information.

After receiving the configuration information, the primary UE stores configuration information thereof and executes it based on the configuration, and sends the configuration information of the secondary UE to corresponding secondary UE.

The secondary UE receives the configuration information transmitted by the primary UE by proxy and executes it based on the configuration.

When the secondary UE has contents that need to be reported through UL RRC signaling, such as measurement reporting or assistance information reporting, the secondary UE sends the contents to the primary UE through an inter-UE interface, and the primary UE organizes RRC signaling to report the information about the secondary UE together.

What needs to be described is the security problem, and there are two manners to solve the security problem of secondary UE configuration.

One is to reuse a security configuration process of the primary UE, where the primary UE and the secondary UE trust each other. A message obtained by the primary UE through a de-security operation thereof, such as decryption and integrity verification, is a plaintext message. When the primary UE sends the message to the secondary UE, an interface process between the primary UE and the secondary UE is used for security protection, which is equivalent to performing security maintenance in gNB-primary UE and primary UE-secondary UE separately. The configuration data is plaintext for the primary UE, so the primary UE needs to be credit UE.

The other is, an end-to-end security operation is also established between the secondary UE and gNB, that is, the secondary UE establishes an end-to-end security mechanism with the gNB by using the primary UE, so that both configuration information sent by the gNB to the secondary UE and reverse reporting information can be guaranteed through the end-to-end security mechanism, which is more secure, and there is not much requirement on the primary UE. Because the data of the secondary UE is encrypted data that cannot be explored, which is more secure.

### Embodiment 2: Multiple RRC connections, corresponding to 2).

In this embodiment, RRC connection maintenance is performed for multiple UEs in a multi-UE architecture, that is, an independent RRC connection is established for each UE in this architecture, and configuration information and reporting information are independently transmitted through RRC connections thereof.

In this embodiment, the primary UE may establish an RRC connection first, and after the establishment is successful, the secondary UE also needs to establish an RRC connection thereof. There are two trigger manners.

One is that the primary UE reports the requirement of establishing a multi-UE architecture, and informs the gNB of a situation of the secondary UE, such as a total number secondary UEs. The gNB allocates dedicated random access resources for these secondary UEs, and the primary UE distributes the dedicated random access resources to different secondary UEs; and then the secondary UE initiates a contention free random access procedure using the dedicated resources and establishes an RRC connection to the network side.

The other is that the secondary UE initiates RRC connection establishment by itself, and the secondary UE initiates contention-based random access based on an existing UE behavior, and carries an RRC connection establishment request in a message (Message, Msg) 3 or Msg A to establish an RRC connection to the gNB, and then informs the secondary UE that it is to establish a multi-UE architecture, and sends primary UE identification information thereof to the base station, so that the base station can configure subsequent associated bearers for these UEs; or after the RRC connection is established, the primary UE sends the identification information of the secondary UE to the base station for subsequent association.

When RRC connections of the primary UE and the secondary UE are all established, and requirements thereof for establishing a multi-UE architecture is also informed to the base station, subsequently, the base station may configure a bearer for the primary UE and the secondary UE separately based on a service requirement.

The configuration information of the primary UE is sent through an RRC process thereof, which may include the following contents: bearer configuration information of the primary UE, including N0 RB configurations and a configuration carrying SDAP, PDCP, RLC, MAC, and a PHY layer, or include M0 RLC bearer configurations and a configuration carrying RLC, MAC, and a PHY layer; measurement configuration information; security configuration information; and DC or CA configuration information;
the configuration information of the secondary UE 1 is sent through an RRC process thereof, which may include the following contents: bearer configuration information used by the secondary UE 1, including N1 RB configurations and a configuration carrying SDAP, PDCP, RLC, MAC, and a PHY layer, or include M1 RLC bearer configurations and a configuration carrying RLC, MAC, and a PHY layer; measurement configuration information; security configuration information; and DC or CA configuration information; and consistency of configurations is ensured by the base station.

When the primary UE or the secondary UE has any requirement for UL RRC reporting, such as measurement reporting or assistance information reporting, the primary UE and the secondary UE each use their own RRC connection.

Embodiment 3: Multiple RRC connections + primary UE assisted transmission, corresponding to 3).

On the basis of Embodiment 2, this embodiment introduces another manner to maintain the RRC connection of multiple UEs in a multi-UE architecture, that is, to establish an independent RRC connection for each UE in the architecture, and the configuration information and the reporting information are transmitted independently through RRC connections thereof, but only the primary UE has DL and/or UL channels for transmitting RRC signaling.

In this embodiment, each UE establishes an RRC connection to the gNB, and a process is similar to that in Embodiment 2. A difference is that in Embodiment 2, UL/DL RRC signaling of each UE is directly transmitted through a Uu interface between the UE and the gNB, while in this embodiment, considering that the secondary UE may be limited in uplink capability, and the like, the secondary UE may not have a transmission capability for DL/UL RRC signaling, so it can be transferred by using the primary UE.

Generally, the primary UE needs to establish a special transmission channel for the RRC of the secondary UE, such as message transmission of signaling radio bearer (Signaling Radio Bearer, SRB) 1. The PDCP may be located between the secondary UE and the gNB end to end, while the RLC bearer is located between the primary UE and the base station. It is equivalent to transmitting the RRC signaling of the secondary UE through the transmission channel of the primary UE, which can be bidirectional or unidirectional. If it is unidirectional, it means that one direction is transmitted via the primary UE, and the other direction is transmitted through a Uu interface thereof.

Establishment of the transmission channel is also configured by the base station, and the secondary UE or the primary UE reports the requirement/request to the gNB, so that the gNB configures appropriate paths for them to transmit RRC signaling in a suitable transmission mode.

It can be seen that, in this embodiment of this application, the network side device may maintain one or more RRC connections in a framework of multi-UE common transmission.

If there is only one RRC connection, the RRC connection may be established between the primary UE and the base station. The configuration of another secondary UE is carried in the RRC signaling of the primary UE; and UL reporting of another secondary UE is sent to the primary UE by the secondary UE and is reported through the RRC process of the primary UE.

If multiple RRC connections are established, the primary UE and the secondary UE each have the RRC connection, the primary UE or the secondary UE reports that the network needs to establish a multi-UE architecture, and the network ensures consistency of configurations for multiple UEs. The RRC signaling of the secondary UE may be transmitted through a Uu interface thereof or through the Uu interface of the primary UE. When the RRC signaling of the secondary UE is transmitted through the Uu interface of the primary UE, a transmission path of the RRC signaling of the secondary UE may be configured by the base station. A PDCP layer of an SRB of the secondary UE is located in the secondary UE, and an RLC bearer is located in the primary UE.

According to the RRC connection maintenance method provided in this embodiment of this application, the RAN side may separately or uniformly maintain the RRC connections for multiple UE configurations, so that the UE can transmit together with multiple devices under the control of the network side, and the service experience and system efficiency of the UE can be guaranteed.

It should be noted that, the RRC connection maintenance method provided in this embodiment of this application may be performed by an RRC connection maintenance apparatus, or by a control module that is in the RRC connection maintenance apparatus and that is configured to perform the RRC connection maintenance method. In this embodiment of this application, that an RRC connection maintenance apparatus performs the RRC connection maintenance method is used as an example to describe the RRC connection maintenance apparatus provided in this embodiment of this application.

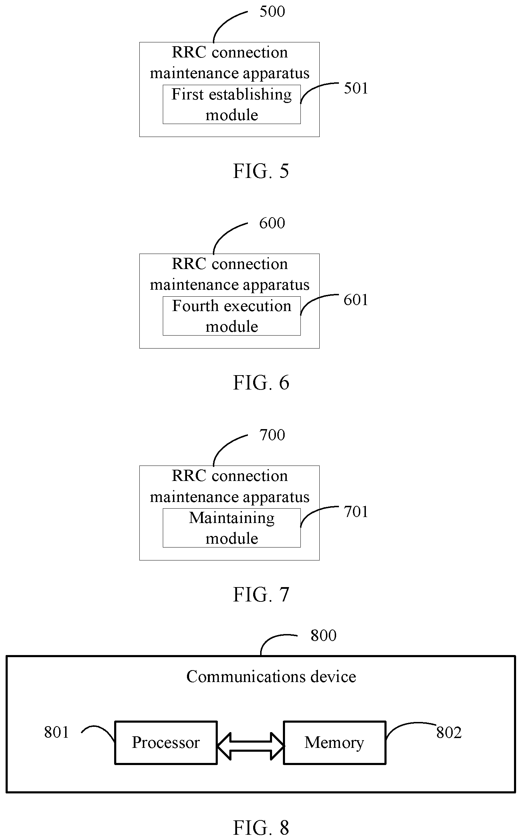

FIG. 5 is a first structural diagram of an RRC connection maintenance apparatus according to an embodiment of this application.

As shown in FIG. 5, an RRC connection maintenance apparatus 500 includes:
a first establishing module 501, configured to establish a first RRC connection to a network side device, where
the primary terminal is a terminal among Q terminals, the primary terminal supports transmitting information about some or all of the Q terminals, and the Q terminals support receiving data of a first service together, where Q is an integer greater than 1.

Optionally, only the primary terminal among the Q terminals establishes an RRC connection to the network side device.

Optionally, the RRC connection maintenance apparatus 500 further includes:
a first sending module, configured to send first information to the network side device, where the first information indicates that the primary terminal expects to receive the data of the first service together with other terminals.

Optionally, the first information further includes related information of at least one secondary terminal, and the related information includes at least one of the following: identification information; authentication information; capability information; and assistance information, where
the Q terminals include the at least one secondary terminal.

Optionally, the RRC connection maintenance apparatus 500 further includes:
a first execution module, configured to perform a first operation, where the first operation includes at least one of the following:
receiving first downlink information of a first secondary terminal sent by the network side device, and sending the first downlink information to the first secondary terminal, where the first secondary terminal is any secondary terminal among the Q terminals; and
receiving first uplink information sent by a second secondary terminal, and sending the first uplink information to the network side device, where the second secondary terminal is any secondary terminal among the Q terminals.

Optionally, the information about the secondary terminal meets at least one of the following:
downlink information of the secondary terminal is sent by the network side device in a first security mechanism and is sent by the primary terminal in a second security mechanism; or downlink information of the secondary terminal is sent by the network side device in a third security mechanism; and
uplink information of the secondary terminal is sent by the secondary terminal in a second security mechanism and is sent by the primary terminal in a first security mechanism; or uplink information of the secondary terminal is sent by the secondary terminal in a third security mechanism, where
the first security mechanism is a security mechanism between the network side device and the primary terminal, the second security mechanism is a security mechanism between the primary terminal and the secondary terminal, and the third security mechanism is a security mechanism between the network side device and the secondary terminal.

Optionally, the Q terminals separately establish an RRC connection to the network side device.

Optionally, the RRC connection maintenance apparatus 500 further includes:
a second execution module, configured to execute at least one of the following:
sending first information to the network side device, where the first information indicates that the primary terminal expects to receive the data of the first service together with other terminals;
receiving at least one dedicated random access resource sent by the network side device; and
sending a dedicated random access resource to a third secondary terminal, where the third secondary terminal is any secondary terminal among the Q terminals.

Optionally, the RRC connection maintenance apparatus 500 further includes:
a second sending module, configured to send second information to the network side device, where the second information includes identification information of Q-1 secondary terminals among the Q terminals.

Optionally, the RRC connection maintenance apparatus 500 further includes:
a third execution module, configured to perform a second operation, where the second operation includes at least one of the following:
receiving second downlink information of a fourth secondary terminal sent by the network side device, and sending the second downlink information to the fourth secondary terminal, where the fourth secondary terminal is any secondary terminal among the Q terminals; and
receiving second uplink information sent by a fifth secondary terminal, and sending the second uplink information to the network side device, where the fifth secondary terminal is any secondary terminal among the Q terminals.

Optionally, information about the secondary terminal is forwarded through a radio link control (RLC) layer of the primary terminal, and the information about the secondary terminal is received or sent through a packet data convergence protocol (PDCP) layer of the secondary terminal.

The RRC connection maintenance apparatus 500 provided in this embodiment of this application can implement each process implemented in the method embodiment of FIG. 2, and a same technical effect is achieved. To avoid repetition, details are not described herein again.

FIG. 6 is a second structural diagram of an RRC connection maintenance apparatus according to an embodiment of this application.

As shown in FIG. 6, an RRC connection maintenance apparatus 600 includes:
a fourth execution module 601, configured to perform a third operation, where the third operation includes at least one of the following:
transmitting information about the secondary terminal between the secondary terminal and the network side device by proxy by using a primary terminal without establishing an RRC connection to the network side device; and
establishing a second RRC connection to the network side device, where
the secondary terminal is any secondary terminal among Q terminals, the Q terminals support receiving data of a first service together, the Q terminals include the primary terminal, and Q is an integer greater than 1.

Optionally, the information about the secondary terminal meets at least one of the following:
downlink information of the secondary terminal is sent by the network side device in a first security mechanism and is sent by the primary terminal in a second security mechanism; or downlink information of the secondary terminal is sent by the network side device in a third security mechanism; and
uplink information of the secondary terminal is sent by the secondary terminal in a second security mechanism and is sent by the primary terminal in a first security mechanism; or uplink information of the secondary terminal is sent by the secondary terminal in a third security mechanism, where
the first security mechanism is a security mechanism between the network side device and the primary terminal, the second security mechanism is a security mechanism between the primary terminal and the secondary terminal, and the third security mechanism is a security mechanism between the network side device and the secondary terminal.

Optionally, the fourth execution module 601 is specifically configured to:
receive a dedicated random access resource sent by the primary terminal; and
use the dedicated random access resource to establish the second RRC connection to the network side device.

Optionally, the RRC connection maintenance apparatus 600 further includes:
a second sending module, configured to send third information to the network side device, where the third information includes identification information of the primary terminal.

Optionally, the RRC connection maintenance apparatus 600 further includes:
a fifth execution module, configured to perform a fourth operation, where the fourth operation includes at least one of the following:
transmitting the information about the secondary terminal through a first interface, where the first interface is a communications interface between the secondary terminal and the network side device; and
transferring the information about the secondary terminal between the secondary terminal and the network side device by using a first target terminal, where the first target terminal is the primary terminal or any other secondary terminal among the Q terminals.

Optionally, in a case that the information about the secondary terminal is transferred by using the first target terminal, the information about the secondary terminal meets: a passed PDCP layer is located at the secondary terminal, and a passed RLC layer is located at the first target terminal.

The RRC connection maintenance apparatus 600 provided in this embodiment of this application can implement each process implemented in the method embodiment of FIG. 3, and a same technical effect is achieved. To avoid repetition, details are not described herein again.

FIG. 7 is a second structural diagram of an RRC connection maintenance apparatus according to an embodiment of this application.

As shown in FIG. 7, an RRC connection maintenance apparatus 700 includes:
a maintaining module 701, configured to maintain P RRC connections, where the P RRC connections are located between the network side device and a second target terminal, the second target terminal includes some or all of the Q terminals, and the Q terminals support receiving data of a first service together, where P is a positive integer, and Q is an integer greater than 1.

Optionally, in a case that P is equal to 1, the RRC connection is located between the network side device and a primary terminal among the Q terminals.

Optionally, the maintaining module 701 is specifically configured to:
establish an RRC connection to the primary terminal;
receive first information sent by the primary terminal, where the first information indicates that the primary terminal expects to receive the data of the first service together with other terminals; and
establish a first architecture based on the first information, where the first architecture includes the Q terminals.

Optionally, the first information further includes related information of at least one secondary terminal, and the related information includes at least one of the following: identification information; authentication information; capability information; and assistance information, where
the Q terminals include the at least one secondary terminal.

Optionally, the RRC connection maintenance apparatus 700 further includes at least one of the following:
a third sending module, configured to send downlink information of the Q terminals to the primary terminal; and
a first receiving module, configured to receive uplink information of the Q terminals sent by the primary terminal.

Optionally, the information about the secondary terminal among the Q terminals meets at least one of the following:
downlink information of the secondary terminal is sent by the network side device in a first security mechanism and is sent by the primary terminal in a second security mechanism; or downlink information of the secondary terminal is sent by the network side device in a third security mechanism; and
uplink information of the secondary terminal is sent by the secondary terminal in a second security mechanism and is sent by the primary terminal in a first security mechanism; or uplink information of the secondary terminal is sent by the secondary terminal in a third security mechanism, where
the first security mechanism is a security mechanism between the network side device and the primary terminal, the second security mechanism is a security mechanism between the primary terminal and the secondary terminal, and the third security mechanism is a security mechanism between the network side device and the secondary terminal.

Optionally, in a case that P is equal to Q, the Q RRC connections are respectively located between the network side device and the Q terminals.

Optionally, the maintaining module 701 is specifically configured to:
establish an RRC connection to the primary terminal;
separately establish Q-1 RRC connections to Q-1 terminals, where at least one RRC connection among the Q-1 RRC connections is established by using a dedicated random access resource; and
establish a first architecture, where the first architecture includes the primary terminal and the Q-1 terminals.

Optionally, the RRC connection maintenance apparatus 700 further includes at least one of the following:
a second receiving module, configured to receive first information sent by the primary terminal, where the first information indicates that the primary terminal expects to receive the data of the first service together with other terminals; and
a fourth sending module, configured to send at least one dedicated random access resource to the primary terminal.

Optionally, the maintaining module 701 is specifically configured to:
separately establish Q RRC connections to the Q terminals; and
establish a first architecture based on received third information, where the first architecture includes the Q terminals, where
the third information is sent by a primary terminal among the Q terminals, and the third information includes identification information of Q-1 secondary terminals among the Q terminals; or the third information is sent by a secondary terminal among the Q terminals, and the third information sent by each secondary terminal includes the identification information of the primary terminal among the Q terminals.

Optionally, the RRC connection maintenance apparatus 700 further includes:
a sixth execution module, configured to perform a fifth operation, where the fifth operation includes at least one of the following:
transmitting information about a seventh secondary terminal through a first interface, where the first interface is a communications interface between the network side terminal and the seventh secondary terminal, and the seventh secondary terminal includes at least one secondary terminal among the Q terminals; and
transmitting information about an eighth secondary terminal through a second interface, where the second interface is a communications interface between the network side terminal and a third target terminal, the third target terminal is a primary terminal among the Q terminals or any secondary terminal among the Q terminals other than the eighth secondary terminal, and the eighth secondary terminal includes at least one secondary terminal among the Q terminals.

Optionally, information about the eighth terminal meets: a passed PDCP layer is located at the eighth secondary terminal, and a passed RLC layer is located at the second target terminal.

The RRC connection maintenance apparatus 700 provided in this embodiment of this application can implement each process implemented in the method embodiment of FIG. 4, and a same technical effect is achieved. To avoid repetition, details are not described herein again.

The RRC connection maintenance apparatus in this embodiment of this application may be an apparatus or an apparatus or electronic device with an operating system, may be a component, an integrated circuit, a chip in the apparatus, or the electronic device. The apparatus or the electronic device may be a mobile terminal, or a non-mobile terminal. For example, the mobile terminal may include but is not limited to the types of the foregoing listed terminal 11, and the non-mobile terminal may be a server, a network attached storage (Network Attached Storage, NAS), a personal computer (personal computer, PC), a television (television, TV), a teller machine, or a self-service machine. This is not specifically limited in this embodiment of this application. The apparatus or electronic device may be a network side device, and the network side device may include, but is not limited to, the types of network side device 12 listed above, which is not specifically limited in this embodiment of this application.

Optionally, as shown in FIG. 8, an embodiment of this application further provides a communications device 800, including a processor 801, a memory 802, and a program or an instruction stored in the memory 802 and executable on the processor 801. For example, in a case that the communications device 800 is a primary terminal, when the program or the instruction is executed by the processor 801, each process of the method embodiment in FIG. 2 is implemented, and a same technical effect can be achieved. In a case that the communications device 800 is a secondary terminal, when the program or instruction is executed by the processor 801, each process of the method embodiment shown in FIG. 3 is implemented, and a same technical effect can be achieved. In a case that the communications device 800 is a network side device, when the program or the instruction is executed by the processor 801, each process of the method embodiment in FIG. 4 is implemented, and a same technical effect is achieved. To avoid repetition, details are not described herein again.

An embodiment of this application further provides a terminal, including a processor and a communications interface.

When the terminal is the primary terminal, the communications interface is configured to:
establish a first RRC connection to the network side device, where
the primary terminal is a terminal among Q terminals, the primary terminal supports transmitting information about some or all of the Q terminals, and the Q terminals support receiving data of a first service together, where Q is an integer greater than 1.

When the communications device is the secondary terminal, the communications interface is configured to:
perform a third operation, where the third operation includes at least one of the following:
transmitting information about the secondary terminal between the secondary terminal and the network side device by proxy by using a primary terminal without establishing an RRC connection to the network side device; and
establishing a second RRC connection to the network side device, where
the secondary terminal is any secondary terminal among Q terminals, the Q terminals support receiving data of a first service together, the Q terminals include the primary terminal, and Q is an integer greater than 1.

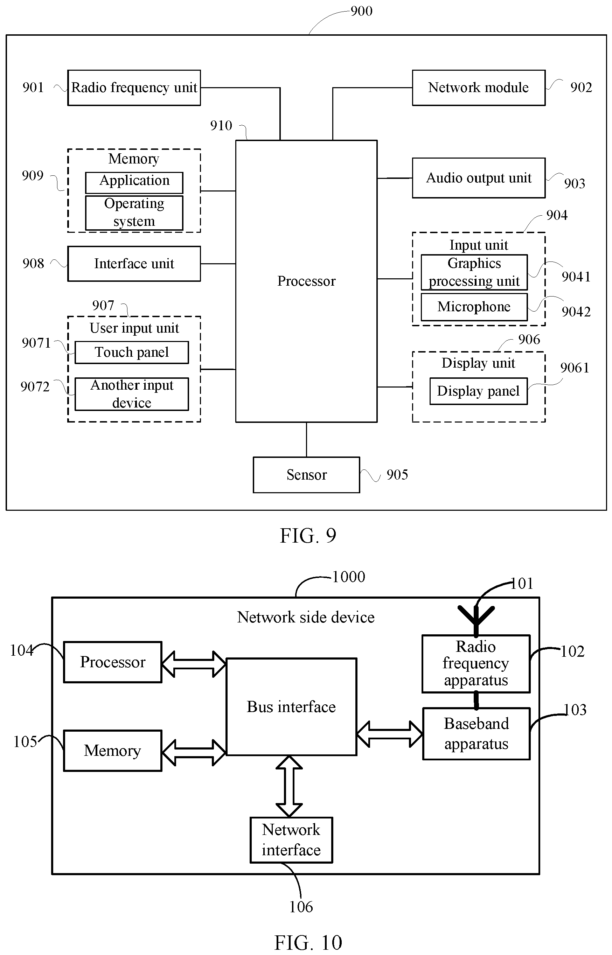

This terminal embodiment corresponds to the foregoing method embodiment on the terminal side. Each implementation process and implementation of the foregoing method embodiment may be applicable to this terminal embodiment, and a same technical effect can be achieved. Specifically, FIG. 9 is a schematic diagram of a hardware structure of a terminal according to an embodiment of this application.

A terminal 900 includes but is not limited to at least a part of components such as a radio frequency unit 901, a network module 902, an audio output unit 903, an input unit 904, a sensor 905, a display unit 906, a user input unit 907, an interface unit 908, a memory 909, and a processor 910.

A person skilled in the art can understand that the terminal 900 may further include a power supply (such as a battery) that supplies power to each component. The power supply may be logically connected to the processor 910 by using a power supply management system, to implement functions such as charging and discharging management, and power consumption management by using the power supply management system. The terminal structure shown in FIG. 9 constitutes no limitation on the terminal, and the terminal may include more or fewer components than those shown in the figure, or combine some components, or have different component arrangements. Details are not described herein.

It should be understood that, in this embodiment of this application, the input unit 904 may include a graphics processing unit (Graphics Processing Unit, GPU) 9041 and a microphone 9042, and the graphics processing unit 9041 processes image data of a still picture or a video obtained by an image capture apparatus (such as a camera) in a video capture mode or an image capture mode. The display unit 906 may include a display panel 9061. Optionally, the display panel 9061 may be configured in a form such as a liquid crystal display or an organic light-emitting diode. The user input unit 907 includes a touch panel 9071 and another input device 9072. The touch panel 9071 is also referred to as a touchscreen. The touch panel 9071 may include two parts: a touch detection apparatus and a touch controller. The another input device 9072 may include but is not limited to a physical keyboard, a functional button (such as a volume control button or a power on/off button), a trackball, a mouse, and a joystick. Details are not described herein.

In this embodiment of this application, the radio frequency unit 901 receives downlink data from a network side device and then sends the downlink data to the processor 910 for processing; and sends uplink data to the network side device. Generally, the radio frequency unit 901 includes but is not limited to an antenna, at least one amplifier, a transceiver, a coupler, a low noise amplifier, a duplexer, and the like.

The memory 909 may be configured to store a software program or an instruction and various data. The memory 909 may mainly include a program or instruction storage area and a data storage area. The program or instruction storage area may store an operating system, and an application or an instruction required by at least one function (for example, a sound playing function or an image playing function). In addition, the memory 909 may include a high-speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage component, a flash memory component, or another non-volatile solid-state storage component.

The processor 910 may include one or more processing units. Optionally, an application processor and a modem processor may be integrated into the processor 910. The application processor mainly processes an operating system, a user interface, an application, an instruction, or the like. The modem processor mainly processes wireless communications, for example, a baseband processor. It may be understood that the modem processor may alternatively be not integrated in the processor 910.

When the terminal is the primary terminal, the radio frequency unit 901 is configured to:
establish a first RRC connection to the network side device, where
the primary terminal is a terminal among Q terminals, the primary terminal supports transmitting information about some or all of the Q terminals, and the Q terminals support receiving data of a first service together, where Q is an integer greater than 1.

In this case, the terminal 900 in this embodiment can implement each process in the method embodiment of FIG. 2 in the embodiments of this application, and a same beneficial effect can be achieved. To avoid repetition, details are not described herein again.

When the communications device is the secondary terminal, the radio frequency unit 901 is configured to:
perform a third operation, where the third operation includes at least one of the following:
transmitting information about the secondary terminal between the secondary terminal and the network side device by proxy by using a primary terminal without establishing an RRC connection to the network side device; and
establishing a second RRC connection to the network side device, where
the secondary terminal is any secondary terminal among Q terminals, the Q terminals support receiving data of a first service together, the Q terminals include the primary terminal, and Q is an integer greater than 1.

In this case, the terminal 900 in this embodiment can implement each process in the method embodiment of FIG. 3 in the embodiments of this application, and a same beneficial effect can be achieved. To avoid repetition, details are not described herein again.

An embodiment of this application further provides a network side device, including a processor and a communications interface, where the communications interface is configured to maintain P RRC connections, where the P RRC connections are located between the network side device and a second target terminal, the second target terminal includes some or all of the Q terminals, and the Q terminals support receiving data of a first service together, where P is a positive integer, and Q is an integer greater than 1. This network side device embodiment corresponds to the foregoing method embodiment on the network side device. Each implementation process and implementation of the foregoing method embodiment may be applicable to this network side device embodiment, and a same technical effect can be achieved.

Specifically, an embodiment of this application further provides a network side device. As shown in FIG. 10, a network device 1000 includes an antenna 101, a radio frequency apparatus 102, and a baseband apparatus 103. The antenna 101 is connected to the radio frequency apparatus 102. In an uplink direction, the radio frequency apparatus 102 receives information by using the antenna 101, and sends the received information to the baseband apparatus 103 for processing. In a downlink direction, the baseband apparatus 103 processes to-be-sent information, and sends the information to the radio frequency apparatus 102. The radio frequency apparatus 102 processes the received information and then sends the information by using the antenna 101.

The frequency band processing apparatus may be located in the baseband apparatus 103. The method performed by the network side device in the foregoing embodiment may be implemented in the baseband apparatus 103. The baseband apparatus 103 includes a processor 104 and a memory 105.

The baseband apparatus 103 may include, for example, at least one baseband board. A plurality of chips are disposed on the baseband board. As shown in FIG. 10, one chip is, for example, the processor 104, connected to the memory 105, to invoke a program in the memory 105, thereby performing operations of the network device shown in the foregoing method embodiment.

The baseband apparatus 103 may further include a network interface 106, configured to exchange information with the radio frequency apparatus 102. For example, the interface is a common public radio interface (common public radio interface, CPRI for short).

Specifically, the network side device in this embodiment of this application further includes: an instruction or a program stored in the memory 105 and executable on the processor 104, and the processor 104 invokes the instruction or program in the memory 105 to perform each process of the method embodiment in FIG. 3 or the method performed by the modules shown in FIG. 7, and a same technical effect is achieved. To avoid repetition, details are not described herein again.

An embodiment of this application further provides a computer-readable storage medium. The computer-readable storage medium stores a computer program, and the computer program, when executed by a processor, implements the processes of the foregoing RRC connection maintenance method embodiment, and a same technical effect can be achieved. To avoid repetition, details are not described herein again. The computer-readable storage medium includes a read-only memory (Read-only Memory, ROM), a random access memory (Random Access Memory, RAM), a magnetic disk, or an optical disc.

An embodiment of this application further provides a readable storage medium. The readable storage medium may be non-volatile or volatile. The readable storage medium stores a program or an instruction, and the program or the instruction is executed by a processor to implement the processes of the foregoing method embodiment shown in FIG. 2, FIG. 3, or FIG. 4, and a same technical effect can be achieved. To avoid repetition, details are not described herein again.

An embodiment of this application further provides a computer program product. The computer program product is stored in a non-transitory storage medium, and when the computer program product is executed by at least one processor, the processes of the foregoing method embodiment shown in FIG. 2, FIG. 3, or FIG. 4 are implemented, and a same technical effect can be achieved. To avoid repetition, details are not described herein again.

The processor is a processor in the terminal in the foregoing embodiment. The readable storage medium includes a computer-readable storage medium, such as a computer read-only memory (Read-Only Memory, ROM), a random access memory (Random Access Memory, RAM), a magnetic disk, or an optical disc.

An embodiment of this application further provides a chip. The chip includes a processor and a communications interface. The communications interface is coupled to the processor, the processor is configured to run a program or an instruction, to implement the processes of the foregoing method embodiment shown in FIG. 2, FIG. 3, or FIG. 4, and a same technical effect can be achieved. To avoid repetition, details are not described herein again.

It should be understood that the chip mentioned in this embodiment of this application may also be referred to as a system-level chip, a system chip, a chip system, or an on-chip system chip.

It should be noted that in this specification, the term "include", "comprise", or any other variant is intended to cover non-exclusive inclusion, so that a process, method, article, or apparatus that includes a series of elements includes not only those elements but also other elements that are not explicitly listed, or includes elements inherent to such a process, method, article, or apparatus. In absence of more constraints, an element preceded by "includes a..." does not preclude the existence of other identical elements in the process, method, article, or apparatus that includes the element. In addition, it should be noted that the scope of the method and the apparatus in the embodiments of this application is not limited to performing functions in an illustrated or discussed sequence, and may further include performing functions in a basically simultaneous manner or in a reverse sequence according to the functions concerned. For example, the described method may be performed in an order different from that described, and the steps may be added, omitted, or combined. In addition, features described with reference to some examples may be combined in other examples.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of this application essentially or the part contributing to the prior art may be implemented in a form of a computer software product. The computer software product is stored in a storage medium (such as a ROM/RAM, a hard disk, or an optical disc), and includes several instructions for instructing a terminal (which may be a mobile phone, a computer, a server, an air-conditioner, a network device, or the like) to perform the method described in the embodiments of this application.

Embodiments of this application are described above with reference to the accompanying drawings, but this application is not limited to the foregoing implementations. The foregoing embodiments are only illustrative rather than restrictive. Inspired by this application, a person of ordinary skill in the art can still derive many variations without departing from the essence of this application and the protection scope of the claims. All these variations shall fall within the protection of this application.

## Claims

1. A radio resource control (RRC) connection maintenance method, comprising:
establishing, by a primary terminal, a first RRC connection to a network side device, wherein
the primary terminal is a terminal among Q terminals, the primary terminal supports transmitting information about some or all of the Q terminals, and the Q terminals support receiving data of a first service together, wherein Q is an integer greater than 1.

2. The method according to claim 1, wherein only the primary terminal among the Q terminals establishes an RRC connection to the network side device.

3. The method according to claim 2, wherein after the establishing, by a primary terminal, a first RRC connection to a network side device, the method further comprises:
sending, by the primary terminal, first information to the network side device, wherein the first information indicates that the primary terminal expects to receive the data of the first service together with other terminals.

4. The method according to claim 3, wherein the first information further comprises related information of at least one secondary terminal, and the related information comprises at least one of the following: identification information; authentication information; capability information; and assistance information, wherein
the Q terminals comprise the at least one secondary terminal.

5. The method according to claim 2, wherein after the establishing, by a primary terminal, a first RRC connection to a network side device, the method further comprises:
performing, by the primary terminal, a first operation, wherein the first operation comprises at least one of the following:
receiving first downlink information of a first secondary terminal sent by the network side device, and sending the first downlink information to the first secondary terminal, wherein the first secondary terminal is any secondary terminal among the Q terminals; and
receiving first uplink information sent by a second secondary terminal, and sending the first uplink information to the network side device, wherein the second secondary terminal is any secondary terminal among the Q terminals.

6. The method according to claim 5, wherein information about the secondary terminal meets at least one of the following:
downlink information of the secondary terminal is sent by the network side device in a first security mechanism and is sent by the primary terminal in a second security mechanism; or downlink information of the secondary terminal is sent by the network side device in a third security mechanism; and
uplink information of the secondary terminal is sent by the secondary terminal in a second security mechanism and is sent by the primary terminal in a first security mechanism; or uplink information of the secondary terminal is sent by the secondary terminal in a third security mechanism, wherein
the first security mechanism is a security mechanism between the network side device and the primary terminal, the second security mechanism is a security mechanism between the primary terminal and the secondary terminal, and the third security mechanism is a security mechanism between the network side device and the secondary terminal.

7. The method according to claim 1, wherein the Q terminals separately establish an RRC connection to the network side device.

8. The method according to claim 7, wherein after the establishing, by a primary terminal, a first RRC connection to a network side device, the method further comprises at least one of the following:
sending, by the primary terminal, first information to the network side device, wherein the first information indicates that the primary terminal expects to receive the data of the first service together with other terminals;
receiving, by the primary terminal, at least one dedicated random access resource sent by the network side device; and
sending, by the primary terminal, a dedicated random access resource to a third secondary terminal, wherein the third secondary terminal is any secondary terminal among the Q terminals.

9. The method according to claim 7, wherein after the establishing, by a primary terminal, a first RRC connection to a network side device, the method further comprises:
sending, by the primary terminal, second information to the network side device, wherein the second information comprises identification information of Q-1 secondary terminals among the Q terminals.

10. The method according to claim 7, wherein after the establishing, by a primary terminal, a first RRC connection to a network side device, the method further comprises:
performing, by the primary terminal, a second operation, wherein the second operation comprises at least one of the following:
receiving second downlink information of a fourth secondary terminal sent by the network side device, and sending the second downlink information to the fourth secondary terminal, wherein the fourth secondary terminal is any secondary terminal among the Q terminals; and
receiving second uplink information sent by a fifth secondary terminal, and sending the second uplink information to the network side device, wherein the fifth secondary terminal is any secondary terminal among the Q terminals.

11. The method according to claim 10, wherein information about the secondary terminal is forwarded through a radio link control (RLC) layer of the primary terminal, and the information about the secondary terminal is received or sent through a packet data convergence protocol (PDCP) layer of the secondary terminal.

12. An RRC connection maintenance method, comprising:
performing, by a secondary terminal, a third operation, wherein the third operation comprises at least one of the following:
transmitting information about the secondary terminal between the secondary terminal and the network side device by proxy by using a primary terminal without establishing an RRC connection to the network side device; and
establishing a second RRC connection to the network side device, wherein
the secondary terminal is any secondary terminal among Q terminals, the Q terminals support receiving data of a first service together, the Q terminals comprise the primary terminal, and Q is an integer greater than 1.

13. The method according to claim 12, wherein information about the secondary terminal meets at least one of the following:
downlink information of the secondary terminal is sent by the network side device in a first security mechanism and is sent by the primary terminal in a second security mechanism; or downlink information of the secondary terminal is sent by the network side device in a third security mechanism; and
uplink information of the secondary terminal is sent by the secondary terminal in a second security mechanism and is sent by the primary terminal in a first security mechanism; or uplink information of the secondary terminal is sent by the secondary terminal in a third security mechanism, wherein
the first security mechanism is a security mechanism between the network side device and the primary terminal, the second security mechanism is a security mechanism between the primary terminal and the secondary terminal, and the third security mechanism is a security mechanism between the network side device and the secondary terminal.

14. The method according to claim 12, wherein the establishing, by a secondary terminal, a second RRC connection to the network side device comprises:
receiving, by the secondary terminal, a dedicated random access resource sent by the primary terminal; and
using, by the secondary terminal, the dedicated random access resource to establish the second RRC connection to the network side device.

15. The method according to claim 12, wherein after the establishing, by a secondary terminal, a second RRC connection to the network side device, the method further comprises:
sending, by the secondary terminal, third information to the network side device, wherein the third information comprises identification information of the primary terminal.

16. The method according to claim 12, wherein after the establishing, by a secondary terminal, a second RRC connection to the network side device, the method further comprises:
performing, by the secondary terminal, a fourth operation, wherein the fourth operation comprises at least one of the following:
transmitting the information about the secondary terminal through a first interface, wherein the first interface is a communications interface between the secondary terminal and the network side device; and
transferring the information about the secondary terminal between the secondary terminal and the network side device by using a first target terminal, wherein the first target terminal is the primary terminal or any other secondary terminal among the Q terminals.

17. The method according to claim 16, wherein in a case that the information about the secondary terminal is transferred by using the first target terminal, the information about the secondary terminal meets: a passed PDCP layer is located at the secondary terminal, and a passed RLC layer is located at the first target terminal.

18. An RRC connection maintenance method, comprising:
maintaining, by a network side device, P RRC connections, wherein the P RRC connections are located between the network side device and a second target terminal, the second target terminal comprises some or all of the Q terminals, and the Q terminals support receiving data of a first service together, wherein P is a positive integer, and Q is an integer greater than 1.

19. The method according to claim 18, wherein in a case that P is equal to 1, the RRC connection is located between the network side device and a primary terminal among the Q terminals.

20. The method according to claim 19, wherein the maintaining, by a network side device, P RRC connections comprises:
establishing, by a network side device, an RRC connection to the primary terminal;
receiving, by the network side device, first information sent by the primary terminal, wherein the first information indicates that the primary terminal expects to receive the data of the first service together with other terminals; and
establishing, by the network side device, a first architecture based on the first information, wherein the first architecture comprises the Q terminals.

21. The method according to claim 20, wherein the first information further comprises related information of at least one secondary terminal, and the related information comprises at least one of the following: identification information; authentication information; capability information; and assistance information, wherein
the Q terminals comprise the at least one secondary terminal.

22. The method according to claim 19, wherein after the maintaining, by a network side device, P RRC connections, the method further comprises at least one of the following:
sending, by the network side device, downlink information of the Q terminals to the primary terminal; and
receiving, by the network side device, uplink information of the Q terminals sent by the primary terminal.

23. The method according to claim 22, wherein information about the secondary terminal among the Q terminals meets at least one of the following:
downlink information of the secondary terminal is sent by the network side device in a first security mechanism and is sent by the primary terminal in a second security mechanism; or downlink information of the secondary terminal is sent by the network side device in a third security mechanism; and
uplink information of the secondary terminal is sent by the secondary terminal in a second security mechanism and is sent by the primary terminal in a first security mechanism; or uplink information of the secondary terminal is sent by the secondary terminal in a third security mechanism, wherein
the first security mechanism is a security mechanism between the network side device and the primary terminal, the second security mechanism is a security mechanism between the primary terminal and the secondary terminal, and the third security mechanism is a security mechanism between the network side device and the secondary terminal.

24. The method according to claim 18, wherein in a case that P is equal to Q, the Q RRC connections are respectively located between the network side device and the Q terminals.

25. The method according to claim 24, wherein the maintaining, by a network side device, P RRC connections comprises:
establishing, by the network side device, an RRC connection to a primary terminal;
separately establishing, by the network side device, Q-1 RRC connections to Q-1 terminals, wherein at least one RRC connection among the Q-1 RRC connections is established by using a dedicated random access resource; and
establishing, by the network side device, a first architecture, wherein the first architecture comprises the primary terminal and the Q-1 terminals.

26. The method according to claim 25, wherein after the establishing, by the network side device, an RRC connection to a primary terminal, and before the separately establishing, by the network side device, Q-1 RRC connections to Q-1 terminals, the method further comprises at least one of the following:
receiving, by the network side device, first information sent by the primary terminal, wherein the first information indicates that the primary terminal expects to receive the data of the first service together with other terminals; and
sending, by the network side device, at least one dedicated random access resource to the primary terminal.

27. The method according to claim 24, wherein the maintaining, by a network side device, P RRC connections comprises:
separately establishing, by the network side device, Q RRC connections to the Q terminals; and
establishing, by the network side device, a first architecture based on received third information, wherein the first architecture comprises the Q terminals, wherein
the third information is sent by a primary terminal among the Q terminals, and the third information comprises identification information of Q-1 secondary terminals among the Q terminals; or the third information is sent by a secondary terminal among the Q terminals, and the third information sent by each secondary terminal comprises the identification information of the primary terminal among the Q terminals.

28. The method according to claim 24, wherein after the maintaining, by a network side device, P RRC connections, the method further comprises:
performing, by the network side device, a fifth operation, wherein the fifth operation comprises at least one of the following:
transmitting information about a seventh secondary terminal through a first interface, wherein the first interface is a communications interface between the network side terminal and the seventh secondary terminal, and the seventh secondary terminal comprises at least one secondary terminal among the Q terminals; and
transmitting information about an eighth secondary terminal through a second interface, wherein the second interface is a communications interface between the network side terminal and a third target terminal, the third target terminal is a primary terminal among the Q terminals or any secondary terminal among the Q terminals other than the eighth secondary terminal, and the eighth secondary terminal comprises at least one secondary terminal among the Q terminals.

29. The method according to claim 28, wherein information about the eighth terminal meets: a passed PDCP layer is located at the eighth secondary terminal, and a passed RLC layer is located at the second target terminal.

30. An RRC connection maintenance apparatus, comprising:
a first establishing module, configured to establish a first RRC connection to a network side device, wherein
the primary terminal is a terminal among Q terminals, the primary terminal supports transmitting information about some or all of the Q terminals, and the Q terminals support receiving data of a first service together, wherein Q is an integer greater than 1.

31. The RRC connection maintenance apparatus according to claim 30, wherein only the primary terminal among the Q terminals establishes an RRC connection to the network side device.

32. The RRC connection maintenance apparatus according to claim 31, wherein the RRC connection maintenance apparatus further comprises:
a first sending module, configured to send first information to the network side device, wherein the first information indicates that the primary terminal expects to receive the data of the first service together with other terminals.

33. The RRC connection maintenance apparatus according to claim 30, wherein the Q terminals separately establish an RRC connection to the network side device.

34. The RRC connection maintenance apparatus according to claim 33, wherein the RRC connection maintenance apparatus further comprises:
a second execution module, configured to execute at least one of the following:
sending first information to the network side device, wherein the first information indicates that the primary terminal expects to receive the data of the first service together with other terminals;
receiving at least one dedicated random access resource sent by the network side device; and
sending a dedicated random access resource to a third secondary terminal, wherein the third secondary terminal is any secondary terminal among the Q terminals.

35. The RRC connection maintenance apparatus according to claim 33, wherein the RRC connection maintenance apparatus further comprises:
a second sending module, configured to send second information to the network side device, wherein the second information comprises identification information of Q-1 secondary terminals among the Q terminals.

36. An RRC connection maintenance apparatus, comprising:
a fourth execution module, configured to perform a third operation, wherein the third operation comprises at least one of the following:
transmitting information about the secondary terminal between the secondary terminal and the network side device by proxy by using a primary terminal without establishing an RRC connection to the network side device; and
establishing a second RRC connection to the network side device, wherein
the secondary terminal is any secondary terminal among Q terminals, the Q terminals support receiving data of a first service together, the Q terminals comprise the primary terminal, and Q is an integer greater than 1.

37. The RRC connection maintenance apparatus according to claim 36, wherein information about the secondary terminal meets at least one of the following:
downlink information of the secondary terminal is sent by the network side device in a first security mechanism and is sent by the primary terminal in a second security mechanism; or downlink information of the secondary terminal is sent by the network side device in a third security mechanism; and
uplink information of the secondary terminal is sent by the secondary terminal in a second security mechanism and is sent by the primary terminal in a first security mechanism; or uplink information of the secondary terminal is sent by the secondary terminal in a third security mechanism, wherein
the first security mechanism is a security mechanism between the network side device and the primary terminal, the second security mechanism is a security mechanism between the primary terminal and the secondary terminal, and the third security mechanism is a security mechanism between the network side device and the secondary terminal.

38. The RRC connection maintenance apparatus according to claim 36, wherein the RRC connection maintenance apparatus further comprises:
a fifth execution module, configured to perform a fourth operation, wherein the fourth operation comprises at least one of the following:
transmitting the information about the secondary terminal through a first interface, wherein the first interface is a communications interface between the secondary terminal and the network side device; and
transferring the information about the secondary terminal between the secondary terminal and the network side device by using a first target terminal, wherein the first target terminal is the primary terminal or any other secondary terminal among the Q terminals.

39. An RRC connection maintenance apparatus, comprising:
a maintaining module, configured to maintain P RRC connections, wherein the P RRC connections are located between the network side device and a second target terminal, the second target terminal comprises some or all of the Q terminals, and the Q terminals support receiving data of a first service together, wherein P is a positive integer, and Q is an integer greater than 1.

40. A communications device, comprising a memory, a processor, and a program or an instruction stored in the memory and executable on the processor, wherein when the program or the instruction is executed by the processor, steps of the RRC connection maintenance method according to any one of claims 1 to 11 are implemented; steps of the RRC connection maintenance method according to any one of claims 12 to 17 are implemented; or steps of the RRC connection maintenance method according to any one of claims 18 to 29 are implemented.

41. A readable storage medium, wherein the readable storage medium stores a program or an instruction, and when the program or the instruction is executed by a processor, steps of the RRC connection maintenance method according to any one of claims 1 to 11 are implemented; steps of the RRC connection maintenance method according to any one of claims 12 to 17 are implemented; or steps of the RRC connection maintenance method according to any one of claims 18 to 29 are implemented.

42. A chip, comprising a processor and a communications interface, wherein the communications interface is coupled to the processor, and the processor is configured to run a program or an instruction to implement steps of the RRC connection maintenance method according to any one of claims 1 to 11, implement steps of the RRC connection maintenance method according to any one of claims 12 to 17, or implement steps of the RRC connection maintenance method according to any one of claims 18 to 29.

43. A computer program product, wherein the computer program product is stored in a non-transitory readable storage device, and the computer program product is executed by at least one processor to implement steps of the RRC connection maintenance method according to any one of claims 1 to 11, or the computer program product is executed by at least one processor to implement steps of the RRC connection maintenance method according to any one of claims 12 to 17, or the computer program product is executed by at least one processor to implement steps of the RRC connection maintenance method according to any one of claims 18 to 29.

44. A communications device, configured to perform steps of the RRC connection maintenance method according to any one of claims 1 to 11, configured to perform steps of the RRC connection maintenance method according to any one of claims 12 to 17, or configured to perform steps of the RRC connection maintenance method according to any one of claims 18 to 29.
